**Europäisches Patentamt**

(19) **European Patent Office**

**Office européen des brevets**

(11) Publication number : **0 448 247 A2**

(12) # EUROPEAN PATENT APPLICATION

(21) Application number : **91301849.5**

(22) Date of filing : **06.03.91**

(51) Int. Cl.⁵ : **G11B 17/10**

(30) Priority : **19.03.90 JP 69328/90**

(43) Date of publication of application :
**25.09.91 Bulletin 91/39**

(84) Designated Contracting States :
**CH DE FR GB IT LI NL SE**

(71) Applicant : **Kabushiki Kaisha Graphico**
**1-11-14 Higashi-Kanda, Chiyoda-ku**
**Tokyo (JP)**

(72) Inventor : **Seki, Noriyuki 440**
**Ooaza-Higashikawate,**
**Akashina-machi, Higashi-Chikuma-gun,**
**Nagano Prefecture (JP)**

(74) Representative : **Smith, Philip Antony et al**
**REDDIE & GROSE 16 Theobalds Road**
**London WC1X 8PL (GB)**

(54) **Copying apparatus for recorded discs.**

㊼   A stack of discs, with a master disc to be copied at the bottom and a series of copying discs above, is held in a feed hopper 5. Copying is effected with the master disc and a copying disc mounted in respective drive units stacked one above the other in a drive device 110. After copying the recorded discs are transferred to a stacker 120. The necessary transport of the discs is effected by a conveyor device 20 which is displaceable along guides 76 from a position between the feed hopper 5 and the drive device 110 to a position in alignment with the stacker 120. The conveyor device has pairs of driven rollers for moving the discs into and out of the conveyor device and is also constructed to allow lifting and lowering of discs to the required level for insertion in the stacked drive units.
   Faulty discs are discharged by inclined rollers 133 and 134 and guide plate 135.

EP 0 448 247 A2

FIG.1

# COPYING APPARATUS FOR RECORDED DISCS

This invention relates to an improvement to an apparatus for copying or editing automatically the content of a floppy disk (hereinafter referred to as the "disk") stored in a hard case such as a 3.5-in. or 3-in. floppy disk.

The Applicant of this invention developed an apparatus which performs an automatic and continuous copying operation of a disk according to the instruction of a controller (computer) and proposed it as Japanese Patent Laid-Open No. 42081/1988.

In the apparatus, a feed hopper for stacking and storing a large number of disks, a disk drive unit for writing, a stacker for storing only those disks for which correct recording is confirmed and another stacker for storing rejected disks are arranged on a line, guide rails are disposed in parallel with a group of these devices and a conveyor device (carrier) having a disk delivery device fixed thereto is reciprocated along the guide rails in such a manner as to feed or discharge sequentially the disks for each step. Besides the frequent movement of the carrier, this prior art apparatus involves another problem in that the long moving distance impedes a higher speed operation.

## SUMMARY OF THE INVENTION

The present invention provides a copying apparatus which shortens the moving time and moving distance of a conveyor device (carrier), shortens also a disk delivery waiting time of the conveyor device and improves operation efficiency.

The processing time necessary for the formatting or/and copying operation of disks mainly relies on the operation time of a disk driver. In the present invention, therefore, drivers are disposed hierarchically in at least two stages, hoppers are disposed symmetrically in such a manner as to interpose the guide rails of the conveyor device (carrier) between them and are mounted onto the carrier so that the disks can penetrate through the disk delivery position in a longitudinal direction and can move up and down, and a stacker for storing the disks on which correct recording is made is juxtaposed with the hoppers. In this manner the length of the guide rails is reduced to the half of that of the conventional apparatus, the idle time of associated devices can be shortened and the overall size of the apparatus can be made compact.

In the apparatus of the present invention, a disk delivery device can receive or discharge the disks from its front and rear portions. Due to this function, the movement of the conveyor device is not necessary for feeding the disks to the FD drivers that are disposed symmetrically with the feed hopper and the delivery operation can be made rapidly.

Since the FD drivers are stacked and disposed in two stage ; parallel processing of the disks becomes possible. Accordingly; operation efficiency can be improved and a necessary space can be saved.

Furthermore, the moving distance can be shortened when the recorded disks are transferred to the stacker side. Due to the disk acceptance/discharge function described above, the disks can be selectively discharged to the back or front side at the same position on the basis of quality of the disks by themselves or their recording state and consequently, the apparatus can be made remarkably compact. In the present invention, blank disk: may of course be formatted disks or unformatted disks.

The above and other objects and novel features of the present invention will become more apparent from the following description when taken in conjunction with the accompanying drawings.

## BRIEF DESCRIPTION OF THE DRAWINGS

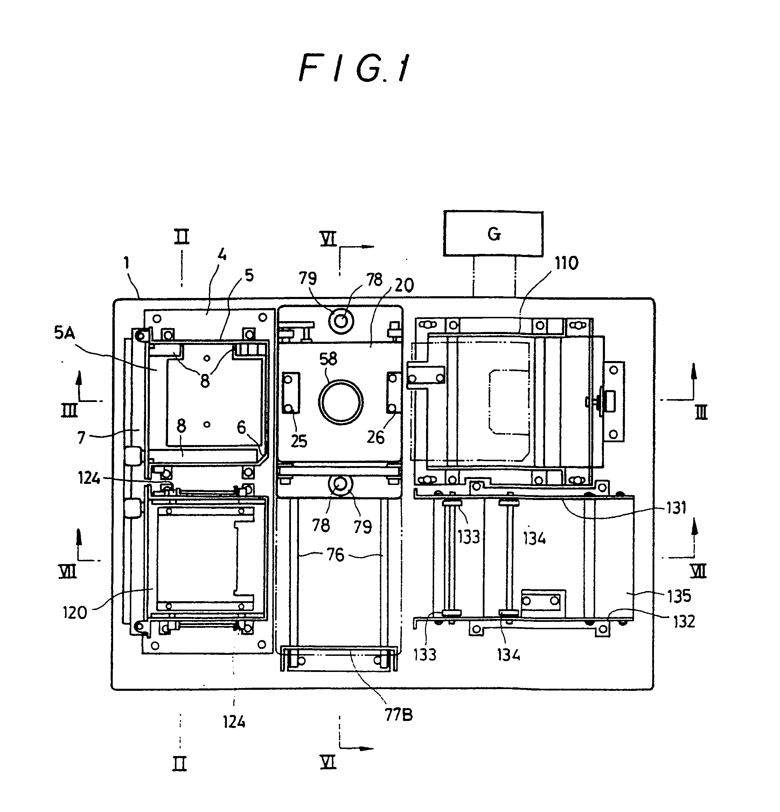

Fig. 1 is a plan view of the apparatus of the present invention as a whole;

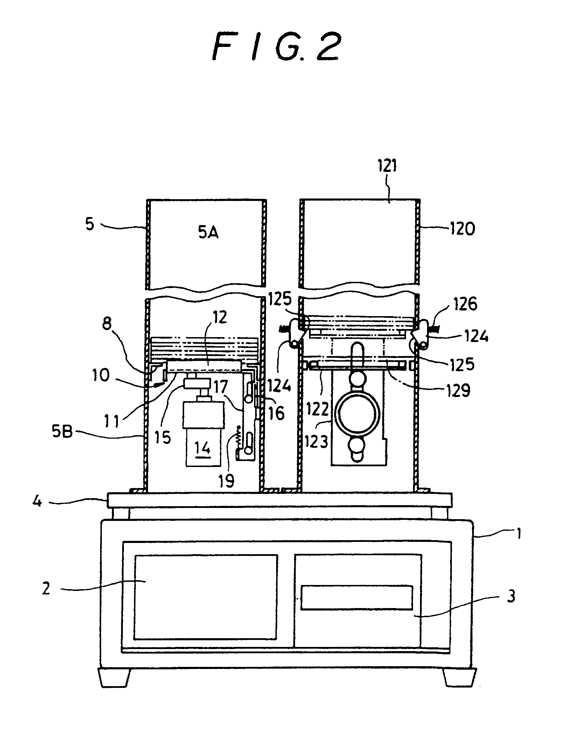

Fig. 2 is a sectional view taken along line II-II;

Fig. 3 is a sectional view taken along line III-III;

Fig. 4 is a sectional view of a disk delivery device which is positioned between a hopper and an FD driver, delivers a disk and when positioned on the back surface side of a delivery stacker, pushes the disk into the stacker or lets a discharge device discharge the disk;

Fig. 5 is a front view of the delivery device when viewed from the FD driver side;

Fig. 6 is a partial sectional view of a conveying device reciprocating on a guide shaft, taken along line VI - VI of Fig. 1; and

Fig. 7 is a sectional view of the principal portions taken along line VII - VII of Fig. 1 when the disk delivery device is positioned on the stacker side.

## DESCRIPTION OF THE PREFERRED EMBODIMENTS

Reference numeral 1 represents a chassis and an operation table 2 and a box 3 for storing those disks which are judged defective after processed are stored in this chassis 1.

Reference numeral 4 represents a table plate, which supports a disk feed hopper 5 and a stacker 120 for storing normally copied disks.

The hopper 5 consists of a cylinder having a square sectional shape and includes a disk storage portion 5A and an empty chamber 5B for storing therein a disk pushout driving mechanism below the disk storage portion 5A. A chamfer portion 6 for judging the direction of the disk is disposed at one of the corners of the inner wall of the storage portion 5A.

Reference numeral 7 represents a door for loading or taking out the disks and reference numeral 8 represents a guide bar for supporting both sides of the lower surface of stacked disks.

In the drawing, a microswitch and a photoelectric switch for detecting the disk position or the like and outputting sequentially operation signals are omitted because they are of known types.

Reference numeral 10 represents a disk push out device and a disk pushout plate 11 is driven in a horizontal direction by a crank 15.

Reference numeral 12 represents a pawl which projects from the rear end of the plate to such a height as not push out a second disk and which meshes with the back surface of the lowermost disk.

Reference numeral 16 represents a lever. Its intermediate portion is pivotally supported (16a). One of its end 16b is connected by a pin to the lower surface of the pushout plate and its other end 16c is brought into contact with an engagement portion 17a of a shutter 17. Reference numeral 18 represents a disk discharge port and reference numeral 19 does a return spring.

Incidentally, in order to make it easy to take out the disks inside the hopper storage portion 5A, particularly the disk on the lowermost surface, a disk elevation device may be disposed, whenever desired, at a position at which it does not impede the operation of the pushout plate.

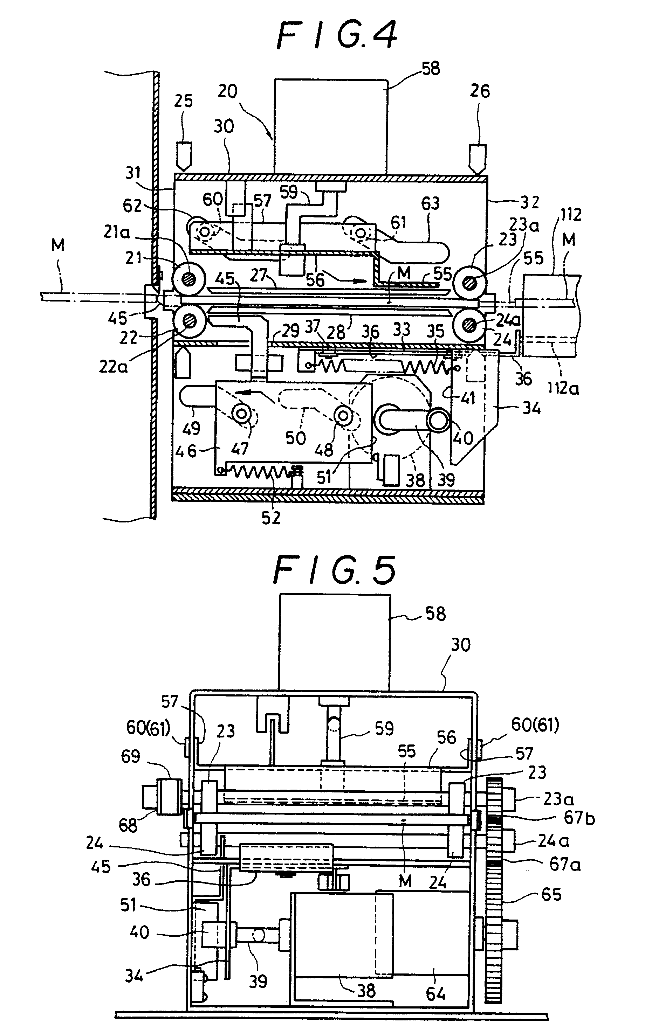

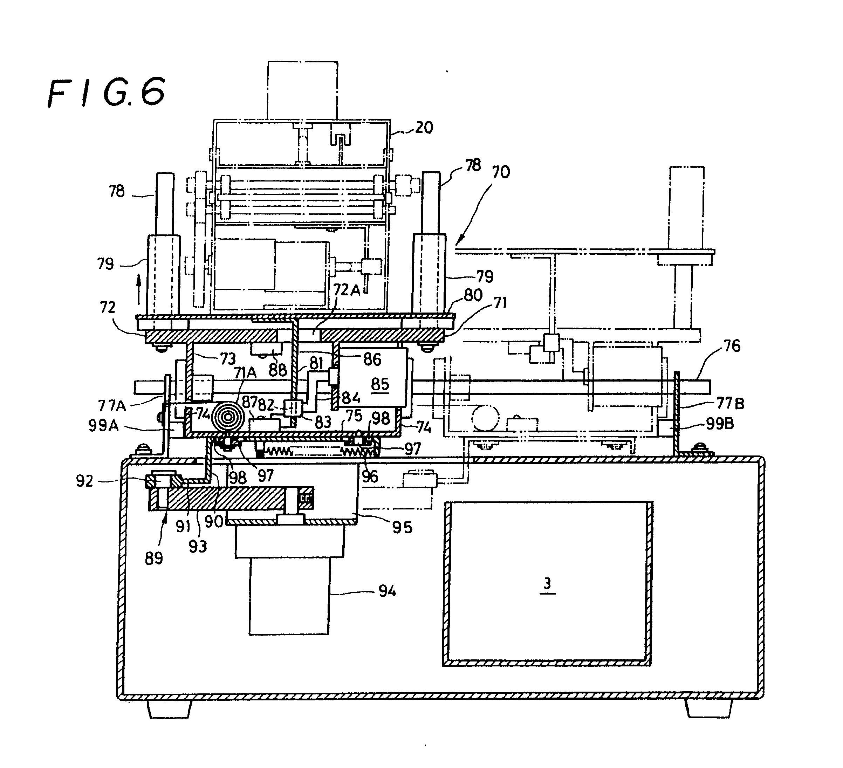

The disk delivery device 20 is as shown in Figs. 4 and 5 and is equipped with a pair of normal and reverse rotation driving rollers 21, 22 and 23, 24 which come into contact with both sides of disk on the right and left of both openings 31, 32 of a frame-like case 30 and with position detectors 25, 26 for the disk.

Reference numeral 64 represents a normal and reverse rotation motor and reference numeral 65 does a reduction gear.. They drive gears 67a and 67b that are fitted to roller shafts 23a, 24a.

Reference numeral 68 represents a pulley fitted to the other end of the roller shaft 23a, which is connected to a pulley (not shown) of the roller shaft 21a by a timing belt 69 and transmits the rotation to the roller shafts 21a, 22a which are gear-connected.

Reference numerals 27 and 28 represent ribs as guide means for guiding the upper and lower surface of the disk on its both sides. The ribs are formed on the right and left inner wall of the case 30 in such a manner as to project therefrom and to oppose each other.

Reference numeral 29 represents a partition of the case. It supports (37) slidably on its lower surface a sliding plate 33, a driving plate 34 connected continuously to the sliding plate 33 and an eject lever 36 connected through an overstroke absorption return spring 35.

Reference numeral 38 represents a motor, 39 is a crank and 40 is a rotary roller. When coming into contact with a contact surface portion 41 of the driving plate 34, the roller 40 advances rightwardly the eject lever 36 through the spring 35.

Reference numeral 45 represents a push rod for pushing out the disk towards the stacker, and this push rod is disposed between the right and left rollers, that is, at the intermediate portion of the case. Reference numeral 46 represents a push plate. Guide rollers 47 and 48 are disposed on this push plate and engage with bent guide grooves 49, 50 disposed on the side wall of the case, respectively. The push plate 46 is disposed in such a manner as to be positioned on substantially the same plane as the driving plate 34.

The disk push rod 45 is pushed out leftwardly in the drawing while being guided by the guide grooves 49, 50 when the rotary roller 40 protrudes and comes into contact with the contact surface portion 51 of the push plate 46, and discharges completely the disk into the stacker. Reference numeral 52 represents a return spring.

Reference numeral 55 represents a push rod for pushing out the disk to the right, that is, to the FD drive or defective disk discharge mechanism. A movable plate 56 connected to this push rod 55 is directly coupled to the shaft of a motor 58 through a crank 59 and guide rollers 60 and 61 are disposed on the side plate portion 57 of the movable plate and engage with the bent guide grooves 62, 63 of the case side plate, respectively.

A conveyor device 70 having mounted thereto the delivery device described above is shown in Fig. 6. It includes a carrier frame 71 moving on two parallel guide shafts 76, a reciprocation driving device 89 and an elevation device 86 of the delivery device.

The carrier frame 71 is formed by disposing integrally a box-shaped frame member 73 on the lower surface of a table 72 and is silidably supported by the two parallel guide shafts 76 that penetrate through a side plate portion 74.

Reference numerals 77A and 77B represent support members that support both ends of the guide shafts.

A plurality of guide posts 78 are implanted onto the carrier table 72 and a support plate 80 for supporting the disk delivery device 20 is mounted through linear bearings 79 that fit to the guide posts 78.

A leg plate 81 is fitted to, and suspended from, the lower surface of the support plate through the through-hole 72A of the table and a roller 83 of a crank 84 coupled directly to a motor 85 fits into a transversely elongated hole 82 in such a manner as to constitute an elevation mechanism 86.

An operation plate 90 is disposed on the lower surface of a bottom plate 75 of the boxed-shaped frame 73 in such a manner that its end portion 91 comes into contact with a cam roller 92 disposed on a crank arm 93. In this manner, a reciprocation mechanism 89 is constituted.

Reference numeral 94 represents a motor and reference numeral 95 does a fixing table plate.

Reference numeral 96 represents a spring for absorbing the overstroke of the end portion of the operation plate, reference numeral 97 represents a guide member and reference numeral 98 does a guide groove.

Reference numeral 99A represents a stopper at the left end and 99B does a stopper at the right end, that is, a terminal stopper. The carrier frame 71 is normally biased to the left by a constant-restoring-force spring 71A interposed between the frame 73 and a guide shaft support member 77A.

The position of disposition of the constant-restoring-force spring is arbitrary. It is shown disposed inside the frame in the drawing and its extension portion penetrates through the side plate portion 74.

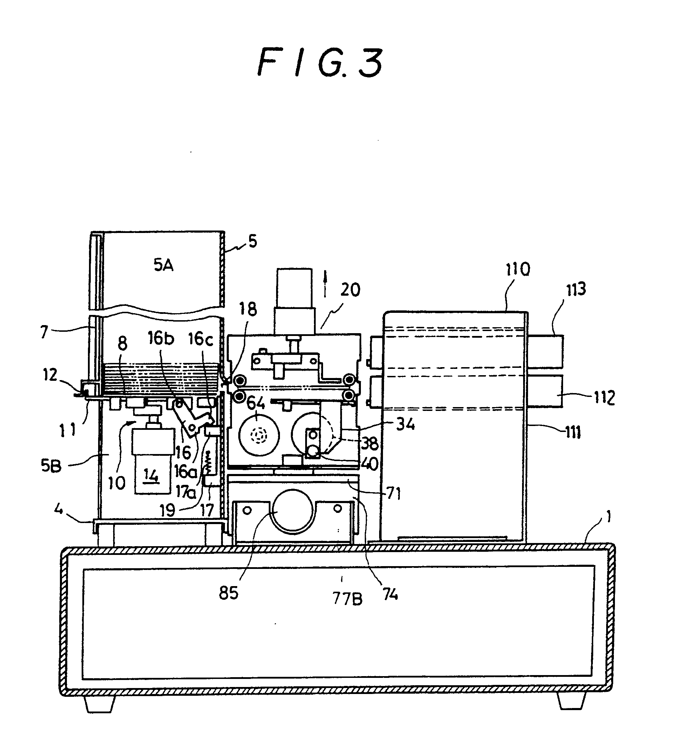

As shown in Fig. 3, the FD drive device 110 is constituted by fixing commercially available drive units in two stages to a fitting frame 11.

The first unit 112 is disposed in agreement with the disk discharge port 18 of the feed hopper and the second unit 113 is disposed at the height of the elevation position of the disk delivery device.

Reference numeral 120 represents a copied disk stacker device. It incorporates therein a hop-up tray 122, which is disposed below the stacker 121 in such a manner as to be capable of elevation, and an elevation device 123, and is equipped with a support pawl 124 which is biased by a pair of spring which come into or retract from the stacker inner wall. Reference numeral 126, 127 and 128 represent a spring, a motor and a crank, respectively.

The hop-up tray 122 is positioned a little below the disk insertion port 129 of the stacker, kept in stand-by there and is elevated to a position a little higher than the engagement step portion 125 of the support pawl 124.

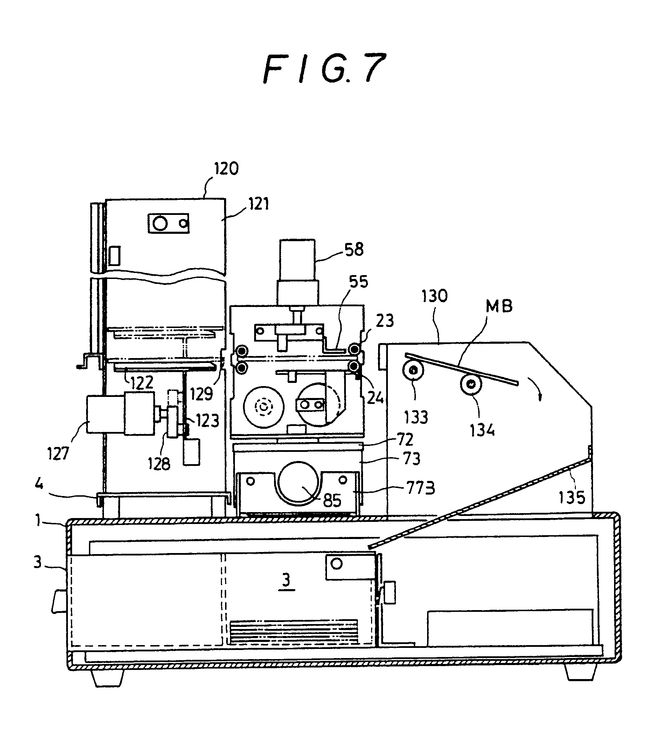

Reference numeral 130 represents a defective disk discharge device. Defective disks MB delivered by the feed rollers 23, 24 fall by their own weight in the direction represented by arrow in Fig. 7 due to the inclination of the first and second guide rollers 133, 134 supported pivotally between the frame side plates 131, 132 and then fall into the storage box 3 along the guide plate 135 that inclines in the opposite direction.

The function of this embodiment is as follows.

The disks for copying are stacked and stored in the feed hopper 5 with the master disk as the original of copying being at the lowermost layer.

When the motor 14 is started and the disk pushout device 10 operate:, the push plate 11 moves forth and at the same time, the shutter 17 descends and opens the discharge port 18, thereby pushing the disk at the lowermost layer to the delivery device 20 on the carrier.

As the feed roller is driven, the disk M pushed by the rollers 21, 22 is taken into the case.

The disk slides between the guide ribs 27, 28 and is put in place inside the apparatus at the position where its tip reaches the other feed rollers 23, 24. Accordingly, both the tip and rear end sides of the disk are clamped between the upper and lower rollers.

Any of the blank drive units is selected by an instruction from a computer (controller) G for controlling the FD driver.

When the selected unit is the first unit 112, the feed rollers 23, 24 are driven as they keep their positions in the feeding direction and the disk is inserted into the insertion port of the first unit.

Then the back surface of the disk comes off from the feed rollers 23, 24, that is, when the detector 26 outputs a signal representing that no disk exists immediately therebelow, the motor 58 is driven and starts the horizontal feed towards the drive unit side while lowering the movable plate 56. In consequence, the push rod 55 comes into contact with the rear end of the disk and pushes the disk into the driving unit. In this manner, push-loading is complete.

The driver is actuated by the loading completion signal and the data of the master disk is read into the computer.

During this processing, the delivery device 20 accepts the next disk from the hopper through the same operation as described above. The blank drive in this case is the second drive 113. Therefore, the motor 85 of the conveyor device 70 is driven by the signal of the controller (not shown) inside the apparatus and the delivery device is elevated to the upper position. Reference numerals 87 and 88 represent position detection switches.

Next, the feed rollers 23, 24 and motor 58 of the delivery device 20 are driven and the disk (blank disk for copying) inside the apparatus is loaded to the second drive. After loading of the disk, the delivery device immediately lowers and enters the stand-by state so as to face the first drive.

When the read operation of the master disk inside the first drive is complete, this completion signal drives the motor 38 and the driving plate 34 is pushed. Since the eject lever 36 pushes the eject pin 112a of the first drive with this operation, the disk inside the drive is pushed outside the drive.

The feed rollers 23, 24 are rotated and driven in the withdrawing direction simultaneously with the operation of the eject lever, the disk discharged is fed into the delivery device while being clamped between the feed rollers 23, 24 in the opposite direction to that of the previous time. The feed rollers are stopped by the output of the detector 25.

The motor 94 of the conveyor device 70 is driven by this stop signal and the cam roller 92 moves the carrier frame 71 to the right in Fig. 6 against the force of the constant-restoring-force spring 71A by pushing the operation plate 90.

After the side plate 74 of the carrier frame comes into contact with the stopper 99B; too, the cam roller 92 pushes the end portion 91 of the operation plate and keeps the conveyor device in a predetermined position, that is, a position facing the stacker 120, by means of the over-stroke absorption mechanism.

The disk M is guided to the insertion port 129 of the stacker by the rotation of the feed rollers 21, 22 and immediately thereafter, the motor 38 of the delivery device 20 is driven. The roller 40 butts against the contact surface portion 51 of the push plate 46 and pushes the push rod 45, so that the disk is set in place on the hop-up tray 122 of the stacker. The hop-up tray is moved up by the elevation device 123 and after the side edge of the disk is engaged with the engagement step portion 125 of the support pawl 124, the hop-up tray lowers and returns to the stand:by position. Accordingly, the master disk is always positioned on the uppermost surface inside the stacker.

The conveyor device 70 then shifts to the feed hopper side, puts a new disk into the delivery device 20, inserts it into the empty drive, receives the processed disk from other drive and sends it to the stacker. The controller monitors the whole apparatus inclusive of the drive units, and the operation of the delivery device is controlled in accordance with the processing status by the drive units.

Accordingly, the operation is carried out in such a manner that even if a processing time by each drive unit is not the same, the waiting time of the delivery device becomes the shortest.

Although the description given above deals with the case where a large number of copies are obtained from a single kind of data, the apparatus of the present invention can automatically produce several copy disks for each of many kinds of master disks inserted into the common feed hopper.

In other words, a plurality of sets each consisting of one master disk at the lowermost layer, an arbitrary number of blank disks and a partition disk having a specific format not used in practice are prepared and an instruction is given to the computer so that when an unreadable partition disk is detected, the computer handles the next disk as a master disk. In this manner, multiple-kind small-volume copy disks having different data can be produced continuously.

## Claims

1. A copying apparatus for a microfloppy disk comprising:

a disk feed hopper equipped with feeding means for stacking and storing at least one formatted or unformatted disk on a master disk placed at the lowermost layer, and feeding sequentially said disks starting with said disk at the lowermost layer to a conveyor device;

stackers equipped with hop-up mechanisms for accepting correctly recorded disks from below and supporting them, and juxtaposed with said disk feed hopper;

guide shafts disposed at the back of said feed hopper and said stackers;

said conveyor device being driven and moved horizontally on said guide shafts by a driving device, and consisting of a carrier frame, a support plate moved up and down on said carrier frame and a disk delivery device fixed onto said support plate and capable of putting in and out said disks in an orthogonal direction to said guide shafts; and

FD drivers disposed at symmetrical positions to said disk feed hopper while interposing said guide shafts between them, and stacked in at least two stages.

2. A copying apparatus for a microfloppy disk according to claim 1, wherein said disk delivery device disposed on said carrier frame through said elevating support plate consists of a framelike case having openings at its both ends, a pair of feed rollers driven both normally and reversely are disposed near said openings with a gap corresponding to the thickness of said disk between them and have disk position detection means, guide means for guiding said disks are disposed on the inner wall of said case between said pair of rollers in such a manner as to oppose each other, and said support plate is driven and moved up and down on said carrier frame by elevation driving means disposed on the lower surface of said carrier frame.

3. A copying apparatus in claim 1 or 2, wherein a rejected disk acceptance-discharge mechanism is disposed at the back of said stacker and adjacent to said FD drivers.

4. A copying apparatus for producing a variety of kinds of copies according to claim 1, wherein a plurality of sets each consisting of a master disk, disks for copying and a specifically formatted partition disk which a computer cannot read are stored inside said disk feed hopper and are used.

5. Copying apparatus for recorded discs comprising vertically-stacked drive units for a master disc and at least one copying disc, a feed hopper for holding a series of discs, a stacker for receiving the discs after copying, and a conveyor device for transporting the discs between the feed hopper, the drive units and the stacker, the conveyor device being translatable from a position between the feed hopper and the drive units to a position adjacent the stacker and having a delivery device for receiving discs from the feed hopper or the drive units and delivering them to the drive units or the stacker, the delivery device being movable vertically to align a disc with a selected drive unit.

# F I G. 1

# F I G. 2

# F I G. 3

# FIG.4

# FIG.5

11

FIG.6

# F I G. 7